# FASCICULE DE BREVET EUROPEEN

(11) **EP 0 545 750 B1**
(45) Date de publication et mention de la délivrance du brevet: **28.06.1995**
(21) Numéro de dépôt: 92403023.2
(22) Date de dépôt: 10.11.1992
(51) Int. Cl.: B64C 27/82, B64C 11/32, F04D 29/36

(54) **Rotor multipale à pas variable, notamment pour système arrière anticouple d'aéronef à voilure tournante**
Mehrblattverstellrotor, insbesondere Gegendrehmomentvorrichtung eines Drehflügelflugzeuges
Multiple blade variable pitch rotor, in particular for rear antitorque apparatus of a rotorcraft

(30) Priorité: 02.12.1991 FR 9114893
(43) Date de publication de la demande: 09.06.1993
(73) Titulaire: AEROSPATIALE Société Nationale Industrielle, 75781 Paris Cédex 16 (FR)
(72) Inventeur: Guimbal, Bruno, F-13290 Les Milles (FR); Jalaguier, Jean-Pierre, F-13127 Vitrolles (FR)
(74) Mandataire: Bonnetat, Christian

(56) Documents cités:
- DE-C- 904 931
- FR-A- 1 531 536
- GB-A- 1 114 934
- US-A- 4 555 219

## Description

La présente invention concerne un rotor multipale à pas variable, particulièrement destiné à être utilisé comme rotor arrière anticouple de type caréné pour un aéronef à voilure tournante.

Par le document FR-A-2 542 695, on connaît déjà un rotor multipale à pas variable de ce type, comprenant :
- un arbre central entraîné en rotation autour d'un axe central ;
- un moyeu solidaire en rotation de l'arbre central autour dudit axe central ;
- des pales réparties autour dudit axe central et liées chacune audit arbre central par un élément torsible ;
- un plateau de commande de pas desdites pales solidaire en rotation dudit arbre central, mais susceptible de coulisser axialement par rapport à ce dernier ; et
- des moyens de commande du coulissement dudit plateau de commande de pas le long dudit arbre central.

Dans ce rotor multipale connu, chaque pale est pourvue d'un pied de pale cylindrique monté dans des paliers prévus dans ledit moyeu et attaqué par le plateau de commande de pas. Ce pied de pale cylindrique est par exemple réalisé en alliage léger et ses portées sur les paliers doivent recevoir des dépôts durs, par exemple en oxyde de chrome. Par ailleurs, la pale elle-même étant généralement réalisée en une matière composite, par exemple à base de fibres de carbone, il est nécessaire de prévoir à une extrémité de ladite pale un épanoui conique servant à son emmanchement dans ledit pied de pale. Il en résulte que le coût d'un tel rotor multipale connu est élevé.

La présente invention a pour objet de remédier à cet inconvénient et de réaliser un rotor multipale à pas variable de coût et masse réduits, comportant un faible nombre de pièces, de sorte qu'il devient économiquement possible d'utiliser un tel rotor sur un hélicoptère léger.

A cette fin, selon l'invention, le rotor multipale à pas variable, du type mentionné ci-dessus, est remarquable en ce que le pied de chaque pale est solidaire d'un levier transversal d'appui et de commande en pas formant palonnier dont une des extrémités est articulée sur ledit moyeu et l'autre sur ledit plateau de commande de pas.

Ainsi, par commande du coulissement axial dudit plateau de commande de pas, on fait varier le pas de la pale, celle-ci pivotant autour de l'articulation de l'extrémité du levier sur le moyeu.

Avantageusement, afin d'obtenir des pieds de pales plats, la dimension longitudinale dudit levier est au moins approximativement parallèle à la corde de la pale associée. Ledit levier peut être rapporté à la pale ou bien faire partie intégrante de celle-ci. Une pale et/ou son levier d'appui et de commande peuvent être réalisés en matière composite ou en métal. Lorsque ledit levier est rapporté, il est avantageux qu'il présente une section en équerre, l'une des ailes de l'équerre servant à l'articulation du levier sur le moyeu et sur le plateau de commande de pas, tandis que l'autre aile de l'équerre sert à la fixation du levier sur le pied de pale.

De préférence, ledit moyeu et ledit plateau de commande de pas présentent chacun la forme d'une coquille concave, les concavités desdites coquilles étant dirigées l'une vers l'autre et 'lesdits leviers étant articulés sur les bords en regard desdites coquilles. Une telle disposition permet au moyeu et au plateau de commande de pas de former un ensemble fermé par rapport à la zone axiale du mécanisme, afin de réduire la circulation d'air entre les pales par pompage centrifuge et donc de réduire les pertes aérodynamiques. Pour faciliter la fabrication des chapes d'articulation des leviers, il est avantageux que les bords desdites coquilles comportent des dents formant chapes disposées de façon que les dents de l'une soient engagées entre les dents de l'autre et que chaque levier soit articulé entre une chape d'une coquille et une chape de l'autre coquille.

Avantageusement, le bord d'attaque de chaque pale est dirigé du côté de l'articulation entre le levier et le plateau de commande de pas. Ainsi, la poussée de la pale aide la'commande d'augmentation en pas, de sorte que l'effort de commande de pas requis est faible. Il n'est alors pas nécessaire de prévoir une servocommande de pas.

Dans une disposition avantageuse, l'articulation entre ledit levier et le plateau de commande de pas se trouve en avant (par rapport au sens de rotation du rotor) du bord d'attaque de la pale et l'articulation entre ledit levier et le moyeu se trouve également en avant du bord de fuite de la pale.

Comme décrit dans le document FR-A-2 542 695, l'élément torsible liant chaque pale à l'arbre central peut être formé par un faisceau torsible radial (par exemple métallique ou de fibres résistantes), formant éventuellement un longeron pour ladite pale. Toutefois, dans le cas présent, ledit faisceau torsible radial passe entre les deux articulations du levier sur le moyeu et sur le plateau de commande de pas et ne peut donc plus être disposé en coïncidence avec l'axe de pas, de sorte qu'il est avantageux de prévoir, pour la liaison desdits faisceaux torsibles entre eux sur ledit arbre central, une bague assurant la reprise des efforts centrifuges de toutes les pales et susceptible de coulisser axialement sur ledit arbre central de telle sorte que les attaches des faisceaux torsibles sur ladite bague puissent suivre les déplacements des pieds des pales selon des axes parallèles à l'axe central lors des variations des commandes du pas des pales.

On remarquera que les deux articulations d'un levier étant disposées de part et d'autre du faisceau torsible, on peut obtenir pour la commande en pas, un bras de levier important réduisant encore les efforts de commande.

Les articulations entre un levier, d'une part, et le moyeu et le plateau de commande de pas, d'autre part, peuvent comporter chacune une rotule. Toutefois, lorsque l'on désire une grande rigidité en battement pour les pales, il est possible de prévoir, au moins pour l'articulation entre le levier et le moyeu, un encastrement par un palier double d'axe transversal audit axe central.

Les figures du dessin annexé feront bien comprendre comment l'invention peut être réalisée. Sur ces figures, des références identiques désignent des éléments semblables.

La figure 1 est une vue en coupe axiale d'un système anticouple à rotor caréné pour hélicoptère, conforme à la présente invention.

La figure 2 est une demi-coupe axiale agrandie du rotor du système anticouple de la figure 1, correspondant à la ligne II-II de la figure 3.

La figure 3 est une coupe partielle selon la ligne III-III de la figure 2.

La figure 4 est une vue en perspective du rotor du système anticouple des figures 1 à 3.

La figure 5 est une coupe transversale d'une pale, selon la ligne V-V de la figure 3.

La figure 6 montre en perspective l'appui et l'articulation d'une pale sur le moyeu et sur le plateau de commande.

La figure 7 illustre, en vue semblable à celle de la figure 6, une variante d'appui et d'articulation d'une pale sur le moyeu.

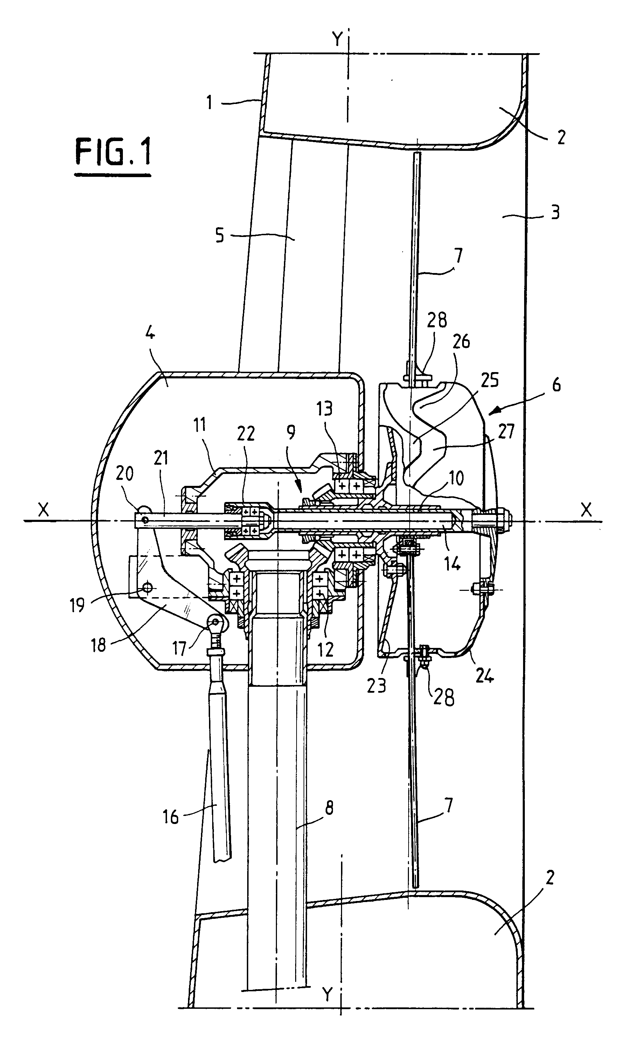

Le système anticouple pour hélicoptère, montré par la figure 1, est disposé de façon usuelle au voisinage de l'extrémité de la queue 1 dudit hélicoptère. Il comporte un carénage 2 délimitant un tunnel cylindrique 3, dont l'axe X-X est transversal à l'axe longitudinal Y-Y de l'hélicoptère. Dans le tunnel 3 est montée une boîte de transmission arrière 4, maintenue coaxialement à l'axe X-X, par des bras de support 5. La boîte de transmission arrière 4 porte elle-même un rotor 6 pourvu d'une pluralité de pales radiales 7, l'axe dudit rotor 6 étant confondu avec l'axe X-X.

De façon usuelle, la boîte de transmission arrière 4 est reliée à une boîte de transmission principale (non représentée, mais disposée au voisinage du ou des moteurs de l'hélicoptère) par l'intermédiaire d'un arbre d'entraînement rotatif 8, au moins sensiblement parallèle à l'axe longitudinal Y-Y. Par un engrenage de renvoi 9, l'arbre d'entraînement rotatif 8 entraîne en rotation l'arbre 10 (d'axe X-X) du rotor 6.

Bien entendu, comme cela est montré sur la figure 1, les arbres 8 et 10 sont montés dans le carter 11 de la boîte de transmission arrière 4 par l'intermédiaire de roulements 12 et 13.

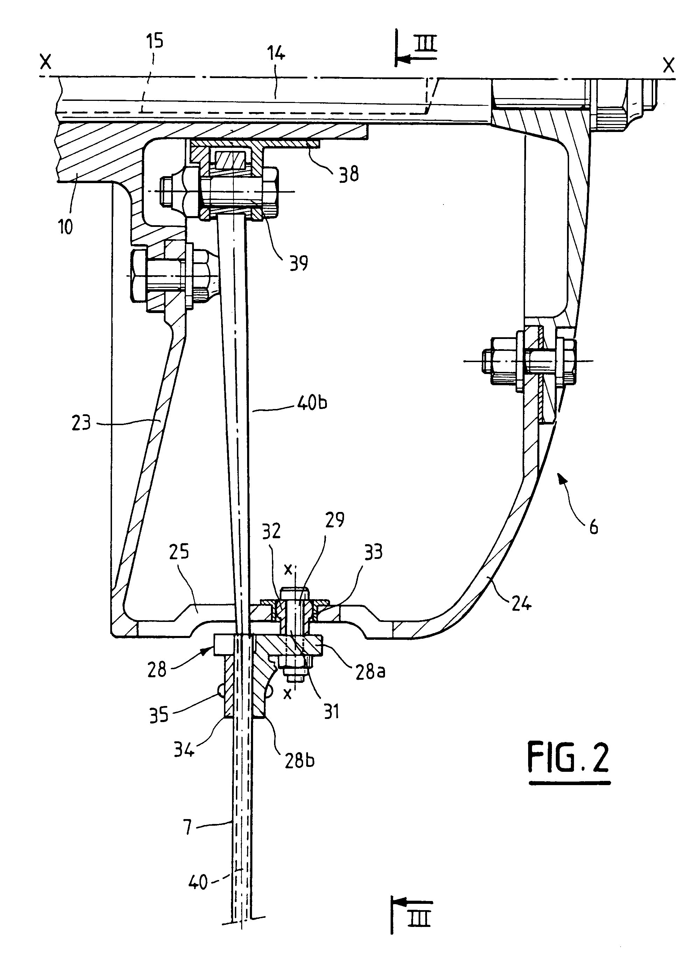

Par ailleurs, l'arbre 10 du rotor 6 est creux et il est traversé longitudinalement par une tige de commande de pas 14 (d'axe X-X), par exemple lié à l'arbre 10 par un système de cannelures longitudinales 15 (voir également la figure 2), de sorte que la tige de commande de pas 14 est solidaire en rotation de l'arbre 10, mais peut coulisser par rapport à celui-ci, parallèlement à l'axe X-X.

Pour commander la tige de commande de pas 14 en coulissement, le système anticouple comporte une bielle de commande 16, articulée en 17 à un levier coudé 18, lui-même articulé en 19 sur le carter 11 de la boîte de transmission arrière 4. L'autre extrémité du levier coudé 18 est articulée en 20 à une tige 21 guidée en coulissement le long dudit axe X-X, de façon que ladite tige 21 puisse coulisser le long dudit axe sous l'action du levier coudé 18. Par un système 22 à roulement, la tige 21 est liée en coulissement, mais non en rotation, à la tige de commande 14.

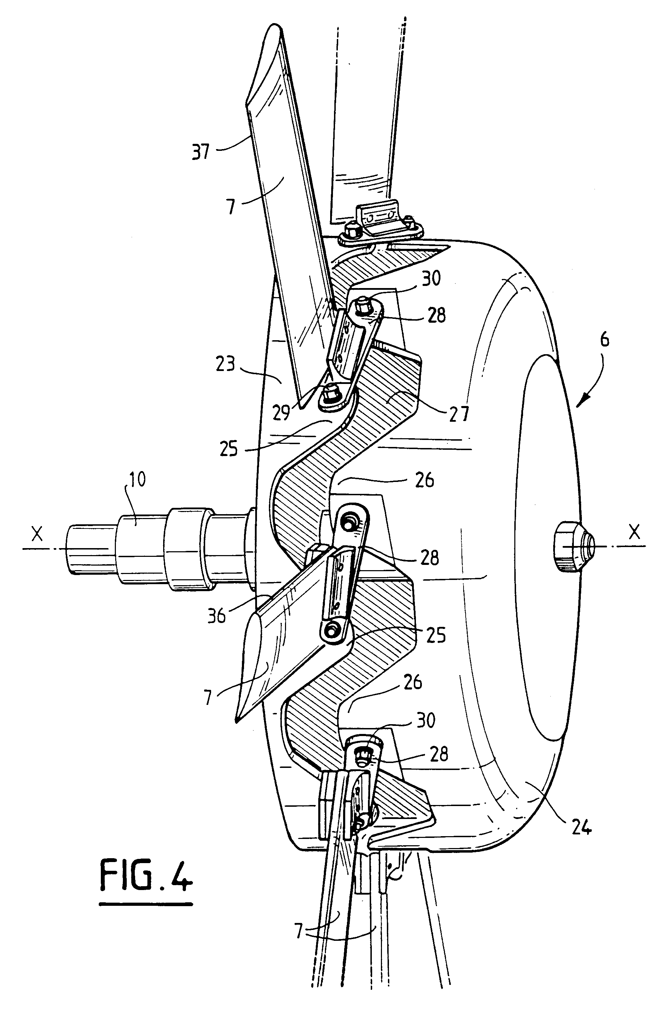

Comme le montrent à plus grande échelle les figures 2 à 4, un moyeu 23 en forme de coquille concave est prévu sur l'arbre 10 du rotor 6. Par ailleurs, un plateau de commande de pas 24, également en forme de coquille concave, est fixé à l'extrémité libre de la tige de commande de pas 14. Les concavités du moyeu 23 et du plateau de commande de pas 24 sont tournées l'une vers l'autre. De plus, les bords en regard du moyeu 23 et du plateau de commande de pas 24 sont pourvus de dents, respectivement 25 et 26, disposées de façon qu'une dent 25 soit disposée entre deux dents 26 et réciproquement, de sorte qu'une fente circulaire en zigzag 27 est ménagée entre le moyeu 23 et le plateau de commande de pas 24 (voir principalement la figure 4 et la partie supérieure simplifiée non coupée du rotor 6 sur la figure 1).

Le pied de chaque pale 7 est solidaire ou est fixé à un levier 28 en forme d'équerre. Une aile 28a du levier 28 a une extrémité articulée, par une articulation 29, d'axe x-x transversal à l'axe X-X, à une chape formée par une dent 25 du moyeu 23, tandis que l'autre extrémité de ladite aile 28a est articulée, par une articulation 30 d'axe transversal à l'axe X-X, à la chape formée par la dent consécutive 26 du plateau de commande de pas 24.

Chacune des articulations 29 ou 30 comporte une rotule 32, par exemple en carbure, traversée par un boulon 31 dont l'axe est orthogonal à ladite aile 28a. Chacune de ces rotules 32 est engagée dans un manchon cylindrique 33 logé dans un alésage ménagé respectivement dans la dent 25 ou 26 concernée selon son épaisseur.

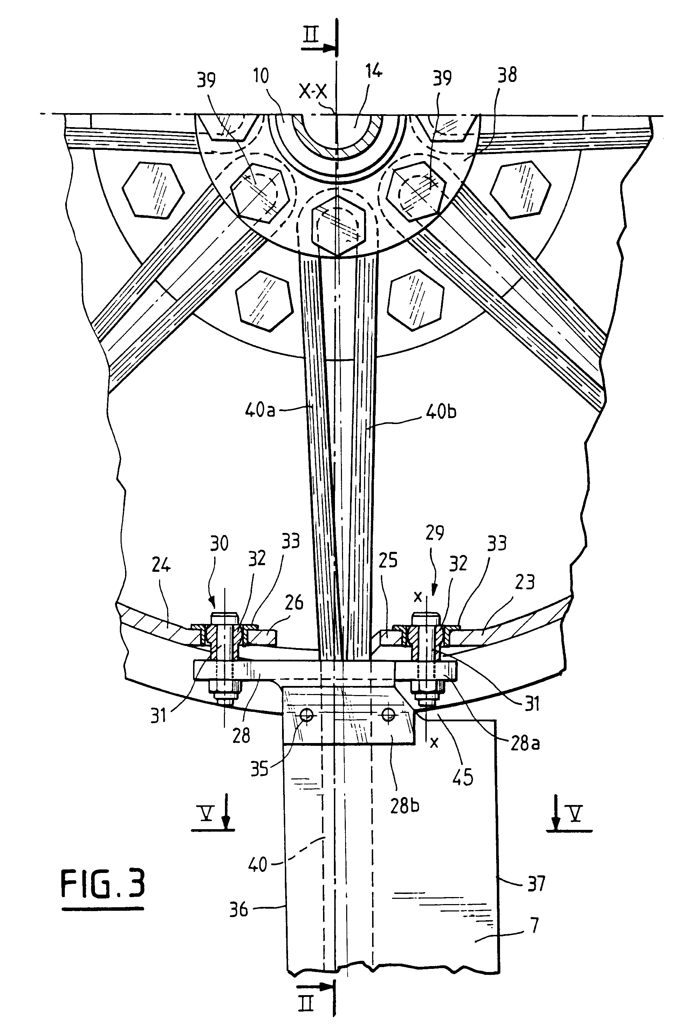

Dans l'exemple illustré sur les figures 2 et 3, l'autre aile 28b du levier 28 est utilisée pour fixer le pied de la pale 7, au moyen d'une contreplaque 34 et de moyens de fixation traversants 35. Le bord d'attaque 36 de la pale 7 est disposé du côté de l'articulation 30 au plateau de commande de pas 24, tandis que le bord de fuite 37 de la pale 7 est disposé du côté de l'articulation 29 au moyeu 23. La dimension longitudinale de l'aile 28a du levier 28 est disposée au moins sensiblement parallèlement à la corde C du profil de la pale 7.

Par ailleurs, sur l'arbre rotatif 10 est montée une bague coulissante 38, pourvue de goujons 39 d'axe parallèle à l'axe X-X.

Chaque pale 7 est reliée à un goujon 39 par l'intermédiaire d'un faisceau torsible radial 40. Un tel faisceau torsible passe entre les articulations 29 et 30 et peut constituer un longeron pour la pale 7. Au voisinage d'un goujon 39, chaque faisceau torsible 40 se divise en deux brins 40a et 40b pour former une boucle enserrant le goujon 39 correspondant.

Chaque faisceau torsible 40 assure donc le maintien de la pale 7 correspondante vis-à-vis de la force centrifuge. En revanche, la poussée et la traînée de chaque pale sont reprises par les deux rotules 32 aux extrémités du levier 28.

Comme on peut le voir sur la figure 3, les deux rotules 32 sont respectivement disposées en avant du bord d'attaque 36 et du bord de fuite 37 de la pale 7. A cet effet, au voisinage de son pied, la pale 7 peut comporter une échancrure 45 dans son bord de fuite.

On voit ainsi que, grâce à ces dispositions, la distance entre les axes des deux rotules 32, qui correspond au bras de levier de commande du pas de la pale, peut être choisie à toute valeur désirée.

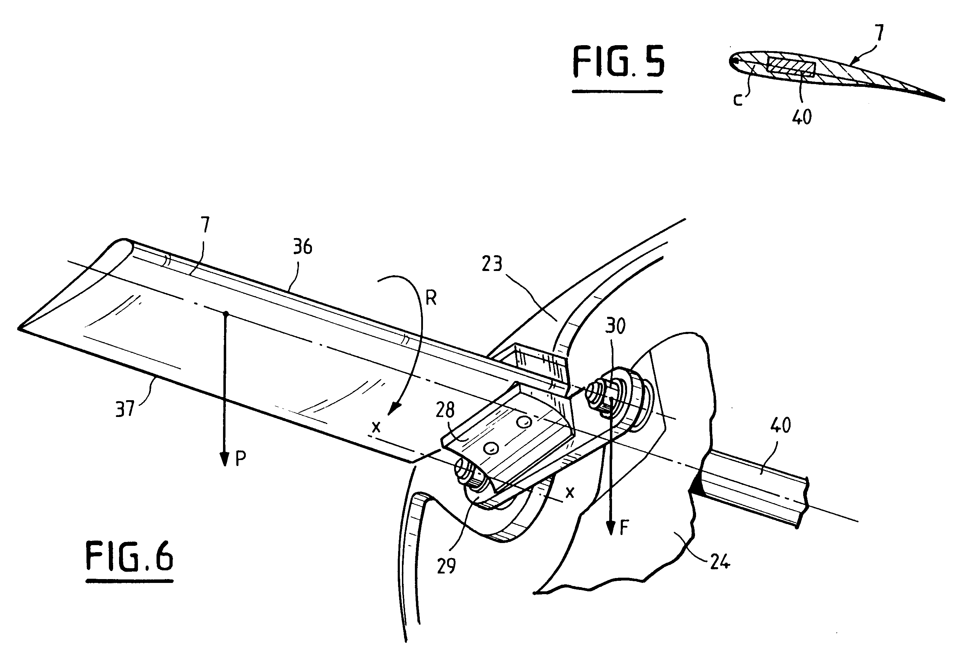

Lorsque la bielle 16 est tirée vers l'avant de l'hélicoptère, grâce au levier coudé 18 et à la tige 21, la tige 14 est poussée vers la droite de la figure 1, de sorte que le plateau de commande de pas 24 est écarté du moyeu 23 (voir la flèche F sur la figure 6). Il en résulte la rotation des leviers 28 et des pales 7 dans le sens des pas croissants (voir la flèche R sur la figure 6), à l'encontre du couple de rappel exercé en torsion par les faisceaux torsibles 40, cette rotation s'effectuant autour de l'axe x-x de la rotule 32 des articulations 29 entre les leviers 28 et le moyeu 23.

On remarquera que :
- la distance entre les axes des deux rotules 32 d'une pale 7 (bras de levier) pouvant être choisie à toute valeur désirée, on peut déterminer cette distance à une valeur suffisamment grande pour que les efforts de commande du plateau 24 soient faibles et que la course de la tige 21 soit suffisamment grande pour éliminer l'influence des jeux ;
- le système ne comportant pas de paliers cylindriques de pied de pale, les frottements sont pratiquement nuls ;
- l'axe x-x de rotation en pas d'une pale 7 se trouve très en arrière (par exemple 70% de la corde) du foyer aérodynamique. Par suite, la portance P exerce sur la pale 7 un couple important, de même sens que la commande en pas (voir la figure 6).

L'effort de commande F est donc faible et il n'est pas nécessaire de prévoir une servocommande pour la commande en pas.

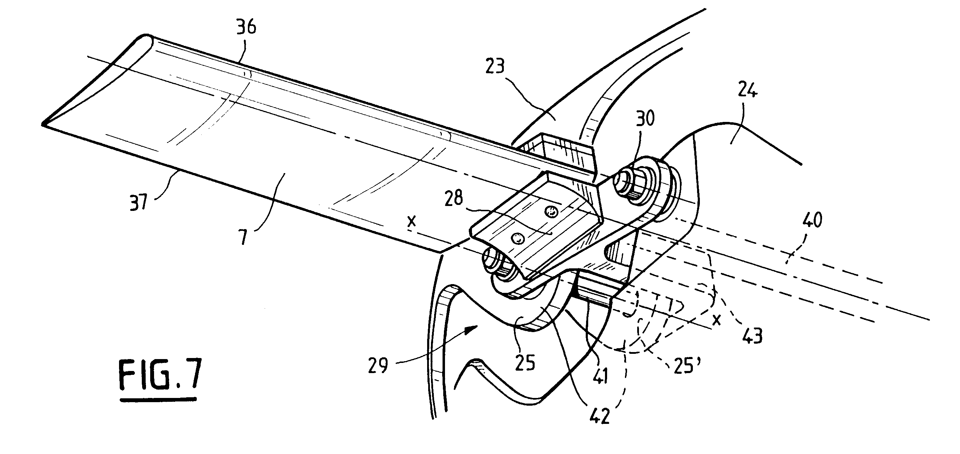

Dans la variante de réalisation de la figure 7, l'articulation 30 entre le levier 28 et le plateau de commande 24 est semblable à celle décrite ci-dessus. En revanche, l'articulation 29 entre le levier 28 et le moyeu 23 présente une structure différente, communiquant à la pale 7 une plus grande rigidité en battement. A cet effet, l'articulation 29 de la figure 7 comporte un axe d'articulation 41, maintenu dans une chape 42 formée par une dent 25 et une dent parallèle 25', solidaires du moyeu 23. Par ailleurs, le levier 28 comporte une patte en équerre 43, formant avec la partie de l'aile 28a dirigée vers le bord de fuite 37, une autre chape, solidaire dudit levier 28 et articulée sur ledit axe 41.

Les pales 7 peuvent être métalliques. Dans ce cas, il est avantageux que les leviers 28 soient intégrés auxdites pales.

Les pales 7 peuvent également être réalisées en une matière composite fibres-résine. On remarquera qu'alors la forme plate desdites pales (sans pied de pale cylindrique) simplifie beaucoup les opérations de fabrication. Toutes les pales 7 peuvent être moulées avec leurs faisceaux torsibles 40 en une seule opération dans un moule plan en deux parties.

## Revendications

1. Rotor multipale (6) à pas variable, particulièrement destiné à être utilisé comme rotor arrière anticouple pour un aéronef à voilure tournante, du type comprenant :
- un arbre central (10) entraîné en rotation autour d'un axe central (X-X) ;
- un moyeu (23) solidaire en rotation de l'arbre central (10) autour dudit axe central (X-X) ;
- des pales (7) réparties autour dudit axe central (X-X) et liées chacune audit arbre central (10) par un élément torsible (40) ;
- un plateau (24) de commande de pas desdites pales (7) solidaire en rotation dudit arbre central (10), mais susceptible de coulisser axialement par rapport à ce dernier ; et
- des moyens (16 à 22) de commande du coulissement dudit plateau de commande de pas (24) le long dudit arbre central (10),
caractérisé en ce que le pied de chaque pale (7) est solidaire d'un levier transversal (28) d'appui et de commande en pas formant palonnier dont une extrémité est articulée sur ledit moyeu (23) et l'autre sur ledit plateau de commande de pas (24).

2. Rotor selon la revendication 1,
caractérisé en ce que la dimension longitudinale dudit levier (28) est au moins approximativement parallèle à la corde (C) de la pale (7) associée.

3. Rotor selon l'une des revendications 1 ou 2,
caractérisé en ce que ledit levier (28) fait partie intégrante de la pale (7).

4. Rotor selon l'une des revendications 1 ou 2,
caractérisé en ce que ledit levier (28) est rapporté à la pale (7).

5. Rotor selon la revendication 4,
caractérisé en ce que ledit levier (28) présente une section en équerre, l'une (28a) des ailes de l'équerre servant à l'articulation du levier (28) sur le moyeu (23) et sur le plateau de commande de pas (24), tandis que l'autre aile (28b) de l'équerre sert à la fixation du levier (28) sur la pale (7).

6. Rotor selon l'une quelconque des revendications 1 à 5,
caractérisé en ce que ledit moyeu (23) et ledit plateau de commande de pas (24) présentent chacun la forme d'une coquille concave, les concavités desdites coquilles étant dirigées l'une vers l'autre et lesdits leviers (28) étant articulés sur les bords en regard desdites coquilles.

7. Rotor selon la revendication 6,
caractérisé en ce que les bords en regard desdites coquilles comportent des dents (25,26) disposées de façon que les dents de l'une soient engagées entre les dents de l'autre et en ce que chaque levier (28) est articulée entre une dent (25) d'une coquille et une dent (26) de l'autre coquille.

8. Rotor selon l'une des revendications 1 à 7,
caractérisé en ce que le bord d'attaque (36) de chaque pale (7) est dirigé du côté de l'articulation (30) entre le levier (28) et le plateau de commande de pas (24).

9. Rotor selon la revendication 8,
caractérisé en ce que l'articulation (30) entre le levier (28) et le plateau de commande de pas (24) se trouve en avant du bord d'attaque (36) de la pale (7) et en ce que l'articulation (29) entre le levier (28) et le moyeu (23) se trouve en avant du bord de fuite (37) de la pale (7).

10. Rotor selon l'une des revendications 1 à 9, dans lequel l'élément torsible liant chaque pale (7) à l'arbre central (10) est formé par un faisceau torsible radial (40),
caractérisé en ce qu'il comporte, pour la liaison desdits faisceaux torsibles (40) sur ledit arbre central (10), une bague (38) susceptible de coulisser axialement sur ce dernier.

11. Rotor selon l'une des revendications 1 à 10,
caractérisé en ce que les articulations (29,30) entre le levier (28), d'une part, et le moyeu (23) et le plateau de commande de pas (24), d'autre part, comportent une rotule (32).

12. Rotor selon l'une des revendications 1 à 10,
caractérisé en ce qu'au moins l'articulation (29) entre le levier (28) et le moyeu (23) comporte un axe fixe (41) d'axe (x-x) transversal audit axe central (X-X).

## Claims

1. Variable-pitch multiblade rotor (6), particularly intended to be used as anti-torque rear rotor for a rotary-wing aircraft, of the type comprising:
- a central shaft (10) driven in rotation around a central axis (X-X);
- a hub (23) integral in rotation with the central shaft (10) around the said central axis (X-X);
- blades (7) distributed around the said central axis (X-X) and each linked to the said central shaft (10) by a twistable element (40);
- a plate (24) for pitch control of the said blades (7) which is integral in rotation with the said central shaft (10), but capable of sliding axially with respect to the latter; and
- means (16 to 22) for control of the sliding of the said pitch control plate (24) along the said central shaft (10),
characterized in that the root of each blade (7) is integral with a transverse support and pitch control lever (28) forming a control bar, one end of which is articulated onto the said hub (23) and the other onto the said pitch control plate (24).

2. Rotor according to Claim 1, characterized in that the longitudinal dimension of the said lever (28) is at least approximately parallel to the chord (C) of the associated blade (7).

3. Rotor according to one of Claims 1 or 2, characterized in that the said lever (28) forms an integral part of the blade (7).

4. Rotor according to one of Claims 1 or 2, characterized in that the said lever (28) is fastened onto the blade (7).

5. Rotor according to Claim 4, characterized in that the said lever (28) has a bracket-shaped cross section, one (28a) of the legs of the bracket serving for articulating the lever (28) onto the hub (23) and onto the pitch control plate (24), while the other leg (28b) of the bracket serves for fixing the lever (28) onto the blade (7).

6. Rotor according to any one of Claims 1 to 5, characterized in that the said hub (23) and the said pitch control plate (24) each exhibit the shape of a concave shell, the concavities of the said shells being turned towards one another and the said levers (28) being articulated onto the facing edges of the said shells.

7. Rotor according to Claim 6, characterized in that the facing edges of the said shells include teeth (25, 26) arranged in such a way that the teeth of one are engaged between the teeth of the other and in that each lever (28) is articulated between a tooth (25) of one shell and a tooth (26) of the other shell.

8. Rotor according to one of Claims 1 to 7, characterized in that the leading edge (36) of each blade (7) is directed towards the same side as the articulation (30) between the lever (28) and the pitch control plate (24).

9. Rotor according to Claim 8, characterized in that the articulation (30) between the lever (28) and the pitch control plate (24) is in front of the leading edge (36) of the plate (7) and in that the articulation (29) between the lever (28) and the hub (23) is in front of the trailing edge (37) of the blade (7).

10. Rotor according to one of Claims 1 to 9, in which the twistable element linking each blade (7) to the central shaft (10) is formed by a twistable radial harness (40), characterized in that, for linking the said twistable harnesses (40) onto the said central shaft (10), it includes a ring (38) capable of sliding axially on the latter.

11. Rotor according to one of Claims 1 to 10, characterized in that the articulations (29, 30) between the lever (28), on the one hand, and the hub (23) and the pitch control plate (24) on the other hand include a plane bearing (32).

12. Rotor according to one of Claims 1 to 10, characterized in that at least the articulation (29) between the lever (28) and the hub (23) includes a fixed spindle (41) with axis (x-x) transverse to the said central axis (X-X).

## Patentansprüche

1. Mehrblattrotor (6) mit veränderlichem Blattwinkel, mit besonderer Verwendung als Gegendrehmoment-Heckrotor für Drehflügelluftfahrzeuge, derart, daß er umfaßt:
- eine zentrale Welle (10), die um eine zentrale Achse (X-X) in Drehung versetzt wird;
- eine Nabe (23), die bei Drehung mit der zentralen Welle (10) um die zentrale Achse (X-X) verbunden ist;
- Blätter (7), die um die zentrale Achse (X-X) verteilt und jeweils mit der zentralen Welle (10) durch ein Torsionselement (40) verbunden sind;
- eine Scheibe (24) zur Verstellung der Blätter (7), die bei Drehung mit der zentralen Welle (10) verbunden, jedoch axial zu dieser verschiebbar ist; und
- Mittel (16 bis 22) zur Steuerung der Verschiebung der Blattverstellscheibe (24) an der zentralen Welle (10),
dadurch gekennzeichnet, daß der Fuß jedes Blattes (7) mit einem als Steuerhebel ausgebildeten Auflage-Querhebel (28) zur Blattverstellung verbunden ist, dessen eines Ende an der Nabe (23) und dessen anderes Ende an der Blattverstellscheibe (24) angelenkt ist.

2. Rotor nach Anspruch 1,
dadurch gekennzeichnet, daß die Längsabmessung von Hebel (28) mindestens annähernd parallel zur Sehne (C) des zugeordneten Blattes (7) verläuft.

3. Rotor nach einem der Ansprüche 1 oder 2,
dadurch gekennzeichnet, daß der Hebel (28) integrierender Bestandteil des Blattes (7) ist.

4. Rotor nach einem der Ansprüche 1 oder 2,
dadurch gekennzeichnet, daß der Hebel (28) an Blatt (7) angesetzt ist.

5. Rotor nach Anspruch 4,
dadurch gekennzeichnet, daß der Hebel (28) im Querschnitt einen Winkel darstellt, dessen einer Schenkel (28a) zur Anlenkung des Hebels (28) an der Habe (23) und an der Blattverstellscheibe (24) dient, während der andere Schenkel (28b) des Winkels zur Befestigung des Hebels (26) an Blatt (7) genutzt wird.

6. Rotor nach einem der Ansprüche 1 bis 5,
dadurch gekennzeichnet, daß die Nabe (23) und die Blattverstellscheibe (24) jeweils die Form einer konkaven Schale haben, wobei die Vertiefungen der Schalen zueinander gerichtet sind und die Hebel (28) an den einander gegenüberliegenden Rändern der Schalen angelenkt sind.

7. Rotor nach Anspruch 6,
dadurch gekennzeichnet, daß die einander gegenüberliegenden Ränder der Schalen Zähne (25,26) haben, die so angeordnet sind, daß die Zähne der einen in die Zähne der anderen eingreifen, und dadurch, daß jeder Hebel (28) zwischen einem Zahn (25) einer Schale und einem Zahn (26) der anderen Schale angelenkt ist.

8. Rotor nach einem der Ansprüche 1 bis 7,
dadurch gekennzeichnet, daß die Vorderkante (36) jedes Blattes (7) nach der Seite des Gelenks (30) zwischen Hebel (28) und Blattverstellscheibe (24) gerichtet ist.

9. Rotor nach Anspruch 8,
dadurch gekennzeichnet, daß sich das Gelenk (30) zwischen Hebel (28) und Blattverstellscheibe (24) vor der Vorderkante (36) von Blatt (7) befindet, und dadurch, daß sich das Gelenk (29) zwischen Hebel (28) und Nabe (23) vor der Hinterkante (37) von Blatt (7) befindet.

10. Rotor nach einem der Ansprüche 1 bis 9, bei dem das Torsionselement zur Verbindung jedes Blattes (7) mit der zentralen Welle (10) aus einem radialen Torsionsbündel (40) besteht,
dadurch gekennzeichnet, daß er zur Verbindung der Torsionsbündel (40) an der zentralen Welle (10) einen Ring (38) hat, der axial an dieser verschiebbar ist.

11. Rotor nach einem der Ansprüche 1 bis 10,
dadurch gekennzeichnet, daß die Gelenke (29,30) zwischen Hebel (28) einerseits und Nabe (23) und Blattverstellscheibe (24) andererseits ein Kugelgelenk (32) haben.

12. Rotor nach einem der Ansprüche 1 bis 10,
dadurch gekennzeichnet, daß zumindest das Gelenk (29) zwischen Hebel (28) und Nabe (23) einen festen Bolzen (41) mit einer quer zur zentralen Achse (X-X) verlaufenden Achse (x-x) hat.
